# EUROPÄISCHE PATENTSCHRIFT

(11) **EP 1 181 552 B1**
(45) Veröffentlichungstag und Bekanntmachung des Hinweises auf die Patenterteilung: **09.04.2003**
(21) Anmeldenummer: 00941900.3
(22) Anmeldetag: 03.05.2000
(51) Int. Cl.: G01N 33/487, G01N 21/35

(54) **VERFAHREN ZUR DIAGNOSE TSE-INDUZIERTER VERÄNDERUNGEN IN GEWEBEN MITTELS INFRAROTSPEKTROSKOPIE**
METHOD FOR DIAGNOSING TSE-INDUCED CHANGES IN TISSUES USING INFRARED SPECTROSCOPY
PROCEDE POUR DIAGNOSTIQUER PAR SPECTROSCOPIE INFRAROUGE DES MODIFICATIONS DE TISSU INDUITES PAR UNE ENCEPHALOPATHIE SPONGIFORME TRANSMISSIBLE (TSE)

(30) Priorität: 20.05.1999 DE 19923811
(43) Veröffentlichungstag der Anmeldung: 27.02.2002
(73) Patentinhaber: Robert-Koch-Institut, 13353 Berlin (DE)
(72) Erfinder: NAUMANN, Dieter, D-10997 Berlin (DE); KNEIPP, Janina, D-10247 Berlin (DE); BALDAUF, Elizabeth, D-14624 Dallgow (DE); LASCH, Peter, D-10247 Berlin (DE); BEEKES, Michael, D-14624 Dallgow (DE)
(74) Vertreter: Wablat, Wolfgang, Dr.Dr.
(86) Internationale Anmeldenummer: DE0001404
(87) Internationale Veröffentlichungsnummer: WO00072007

(56) Entgegenhaltungen:
- DE-A- 19 841 217
- US-A- 5 734 587
- CAUGHEY B W ET AL.: "Secondary structure analysis of the scrapie-associated protein PrP 27-30 in water by infrared spectroscopy" BIOCHEMISTRY, no. 30, 6 August 1991 (1991-08-06), pages 7672-7680, XP000926037
- GOODACRE R ET AL.: "Rapid identification of Streptococcus and Enterococcus species using diffuse reflectance-absorbance Fourier transform infrared spectroscopy and artificial neural networks." FEMS MICROBIOLOGY LETTERS, vol. 140, 1996, pages 233-239, XP000926039
- KNEIPP J ET AL.: "Detection of pathological molecular alterations in scrapie-infected hamster brain by Fourier transform infrared (FT-IR) spectroscopy." BIOCHIMICA ET BIOPHYSICA ACTA , vol. 1501, 2000, pages 189-199, XP000926044

## Beschreibung

Die Erfindung betrifft ein Verfahren für die schnelle Identifizierung von durch transmissible spongiforme Enzephalopathien (TSE) induzierte pathologische Veränderungen in tierischen oder menschlichen Geweben mit Infrarotspektroskopie (IR-Spektroskopie).

Transmissible Spongiforme Enzephalopathien sind übertragbare neurodegenerative Erkrankungen des Zentralnervensystems (ZNS) mit tödlichem Verlauf, die viele Säugetiere sowie auch den Menschen betreffen können. Hierbei gilt TSE als ein Überbegriff, unter dem die bei verschiedenen Spezies auftretenden Krankheitsformen zusammengefaßt werden. Neben der Scrapie (Traberkrankheit), der ursprünglich bei Schafen aufgetretenen, aber auf Hamster und Mäuse übertragbaren Form, sind bislang fünf weitere TSE in. Säugetieren bekannt: Die bovine spongiforme Enzephalopathie (BSE) beim Rind, die chronische Auszehrung (CWD) bei bestimmten amerikanischen Hirscharten, die übertragbare Enzephalopathie (TME) bei Nerzen, die feline spongiforme Enzephalopathie (FSE) bei Katzen und eine spongiforme Enzephalopathie bei Antilopen. Beim Menschen unterscheidet. man vier TSE: Die Creutzfeldt-Jacob-Krankheit (CJD), das Gerstmann-Sträussler-Scheinker-Syndrom (GSS), die familiäre fatale Insomnie (FFI) und Kuru.

Definitiv läßt sich eine TSE a) durch den histologischen Nachweis charakteristischer spongiformer (schwammartiger), mit einer Gliose einhergehender Veränderungen im Hirngewebe, b) durch den immunologischen Nachweis von Ablagerungen des pathologischen Prionproteins (PrP) mittels Western-Blot-Technik, Histo-Blot-Technik und Immunohistochemie, c)durch den elektronenmikroskopischen Nachweis Scrapie-assoziierter (PrP-)Fibrillen (SAF) und d) durch den Nachweis des infektiösen TSE-Agens mittels Übertragungsexperimenten im Tierversuch diagnostizieren.

Klinische Symptome und der laborchemische Nachweis erhöhter Konzentrationen bestimmter Proteine in Liquor und/oder Serum [ Protein 14-3-3 (Zerr et al. (1997) N. *Engl. J. Med.* 336: 874; Zerr et al. (1998) *Ann. Neurol.* 43: 32-40.), Protein S100 (Otto et al. (1997) *J. Neurol.* 244: 566-570; Otto et al. (1998) *Brit.. Med. J.* 316: 577-582; Otto et al. (1998) *J. Neurovirol. 4:* 572-573) und neuronspezifische Enolase (Zerr et al. (1995) *Lancet 345:* 1609-1610)] erlauben bei Mensch und Tier lediglich eine Verdachtsdiagnose. Gleiches gilt für EEG- oder magnetresonanztomografische Veränderungen, die im Zusammenhang mit menschlichen TSE auftreten.

Mit der Weiter- und Neuentwicklung von Nachweisverfahren für TSE werden u.a. folgende Ziele verfolgt:
a) Die Verbesserung der Differentialdiagnostik humaner TSE. Diese Krankheiten lassen sich bisher nur post mortem oder durch Hirnbiopsie mit Gewißheit diagnostizieren.
b) Die Erkennung von TSE-Kontaminationen in Blut, Organen und Geweben sowie in daraus gewonnenen Produkten menschlichen und tierischen Ursprungs.
c) Die Erkennung menschlicher TSE-infizierter Blut-, Organ- und Gewebespender.
d) Die Erkennung TSE-infizierter Nutztiere (z.B. Rinder und Schafe) im präklinischen oder klinischen Stadium am Schlachthof bzw. im Feld.

Die Diagnostik von TSE-Erkrankungen bei Nutztieren ist wegen der potentiellen Übertragbarkeit durch den Verzehr von Fleisch erkrankter Tiere von großem Interesse. So besteht z.B. der Verdacht, daß der Konsum von BSEverseuchtem Rindfleisch eine neue Variante von CJD beim Menschen (nvCJD) verursachen kann. Im Sinne des Verbraucherschutzes und der Eindämmung der Ausbreitung der Epidemie führen daher zur Zeit einige Staaten behördliche Überwachungen des Durchseuchungsgrades von Rinderpopulationen mit BSE ein. In diesem Zusammenhang werden auf Schlachthöfen routinemäßige Kontrollen geschlachteter Rinder angestrebt, von denen die weitere Verwertbarkeit des Schlachtgutes abhängt.

Zur Zeit befinden sich verschiedene Testsysteme in der Entwicklung, um ein sensitives und schnelles Screening großer Probenzahlen auf pathologisches Prionprotein und somit eine TSE-Diagnostik im großtechnischen Maßstab zu ermöglichen. Dazu zählen u.a. ein Kapillarelektrophorese-Immunoassay mit fluoreszenzmarkierten Peptiden (Schmerr & Jenny (1998) *Electrophoresis* 19: 409-419) und ein *Delfia* genanntes immunologisches Detektionssystem mit fluoreszierenden Lanthanidchelaten (Safar et al. (1998) *Nature Medicine 4:* 1157-1165).

Bisher ist nur ein diagnostisches Verfahren zur Identifizierung von TSE-infizierten Nutztieren in großtechnischem Maßstab verfügbar. Dieses ist auf die Anwendung im Schlachthof begrenzt und erlaubt die Feststellung einer BSE im Rind nach Angaben des Entwicklers bis zu einem halben Jahr vor dem Auftreten klinischer Sympome (Information des Herstellers im Internet: http://www.prionics.ch).

Bei diesem von der Schweizer Firma *Prionics AG* entwickelten Verfahren wird die Gewebeprobe aus der Medulla oblongata geschlachteter Rinder homogenisiert und mit dem Enzym Proteinase K behandelt. Das ggf. nach der Behandlung verbleibende pathologische Prionprotein wird mit dem monoklonalen Antikörper 6H4 (hergestellt von der Firma Prionics) markiert und anschließend im Western-Blot angefärbt. Vom Zeitpunkt der Gewinnung der Probe bis zum Erhalt eines endgültigen Ergebnisses vergehen bei diesem Verfahren nach Angaben des Herstellers bis zu 12 Stunden.

Caughey B W et al. 'Secondary structure analysis of the scrapie-associated protein PrP 27-30 in water by infrared spectroscopy' BIOCHEMISTRY, no. 30, 6 August 1991 (1991-08-06), pages 7672-7680 offenbart ein Verfahren zur Diagnose von TSE-induzierten pathologischen Veränderungen in biologischem Material, wobei die Veränderungen durch Scrapie-BSE oder durch eine andere dem TSE-Formenkreis zugehörige Krankheitsform hervorgerufen werden, wobei
(a) Infrarotstrahlung auf ein durch TSE pathologisch verändertes biologisches Material gelenkt wird und die spektralen Charakteristika der Infrarotstrahlung nach Wechselwirkung mit der Probe registriert werden und
(b) die so erhaltenen Infrarotspektren mit einer Referenzdatenbank, welche Infrarotspektren von TSE-infiziertem biologischen Material und von nicht-infizierten biologischen Material enthält, verglichen und klassifiziert werden.

Der Erfindung liegt nun die Aufgabe zugrunde, ein Verfahren zum schnellen, zuverlässigen und ökonomischen Nachweis TSE-induzierter Veränderungen in Geweben zu entwikkeln. Das erfindungsgemäße Verfahren soll auch unter den Bedingungen eines Schlachthofes im Routinebetrieb effektiv einsetzbar sein.

Aufgabe der Erfindung ist somit die Schaffung eines Verfahrens zur Diagnose von TSE-induzierten pathologischen Veränderungen in Geweben, wobei die Veränderungen durch Scrapie, BSE oder durch eine andere dem TSE-Formenkreis zugehörigen Krankheitsform hervorgerufen werden.

Erfindungsgemäß wird diese Aufgabe dadurch gelöst, daß
(a) Infrarotstrahlung auf eine durch TSE pathologisch veränderte Gewebeprobe gelenkt wird und die spektralen Charakteristika der Infrarotstrahlung nach Wechselwirkung mit der Probe registriert werden und
(b) die so erhaltenen Infrarotspektren mit einer Referenzdatenbank, welche Infrarotspektren von TSE-infizierten Geweben und von nicht-infizierten Geweben enthält, verglichen und klassifiziert werden.

Ausgestaltungen der Erfindung werden in den Unteransprüchen beschrieben.

Das der Erfindung zugrunde liegende Verfahren basiert wesentlich auf Messungen der Infrarotspektren des pathologisch veränderten Gewebes. Bekannt ist bereits durch eine Reihe von Publikationen und Patentanmeldungen, daß krankheitsspezifische Veränderungen sich im Infrarotspektrum der Gewebe widerspiegeln können (US Patent 5,168,162 (Wong & Rigas; US Patent 5,038,039; Wong, Rigas; Lasch & Naumann (1998) *Cell. Mol. Biol.* 44: 189-202; Lasch et al. (1998) *Proc. SPIE* 3257: 187-198; Choo et.al. (1996) *Biophys. J*. 71: 1672-1679). Über Infrarotspektroskopie an TSE-Gewebeproben liegen allerdings bislang keine publizierten Daten vor.

Die experimentellen Daten, die der vorliegenden Patentbeschreibung zugrunde liegen, wurden anhand von ZNS-Proben Scrapie-infizierter Hamster als Modellsystem entwickelt. Es wurde im Hamstermodell festgestellt, daß nach Infektion der Tiere mit Scrapie charakteristische Änderungen im Infrarotspektrum von Gewebeproben des ZNS auftreten. Diese Änderungen konnten nach dem erfindungsgemäßen Verfahren durch Vergleich mit entsprechenden Proben von nicht-infizierten, also gesunden Tieren identifiziert werden. Das Verfahren ist prinzipiell für die Diagnose jeder der Krankheitsbilder des TSE-Formenkreises anwendbar.

Verfahrensgemäß ist für die TSE-Diagnostik mittels Infrarotspektroskopie ein Vergleich von Spektren des zu untersuchenden Gewebematerials mit entsprechenden Spektren von Geweben bekannten Ursprungs im Sinne eines Referenzverfahrens notwendig. Die praktische Durchführung des Verfahrens erfordert daher das Vorliegen einer validierten Referenzdatenbank von IR-Spektren, die von gesunden bzw. pathologischen Gewebeproben erhalten wurden. Die Erstellung der Referenzdatenbank ist für eine standardisierte Diagnostik nur einmal erforderlich.

Der Abgleich von Spektren unbekannter Proben mit der Referenzdatenbank erfolgt dann vorzugsweise mittels Techniken der computergestützten Mustererkennungsverfahren, wie z.B. multivariate Statistik, künstliche neuronale Netze, genetische Algorithmen etc..

Zum Erfassen der Spektren wird auf die Proben Infrarotlicht gelenkt und die spektralen Charakteristika der austretenden Strahlung, d.h. nach Wechselwirkung des Lichts mit dem Gewebe registriert. Vorteilhaft ist der Einsatz mikrospektrometrischer Techniken, wenn eine Minimierung der erforderlichen Probenmengen angestrebt wird. Beim Einsatz eines Infrarotmikroskops können darüber hinaus an Dünnschnitten auch ortsaufgelöst spektrale Informationen gewonnen werden, die das Verfahren wesentlich spezifischer und empfindlicher gestalten können. In der Perspektive wäre ein Nachweis mittels Infrarotlichtleiter als Endoskop denkbar, der die Diagnostik von TSE direkt im infizierten Organismus ermöglicht.

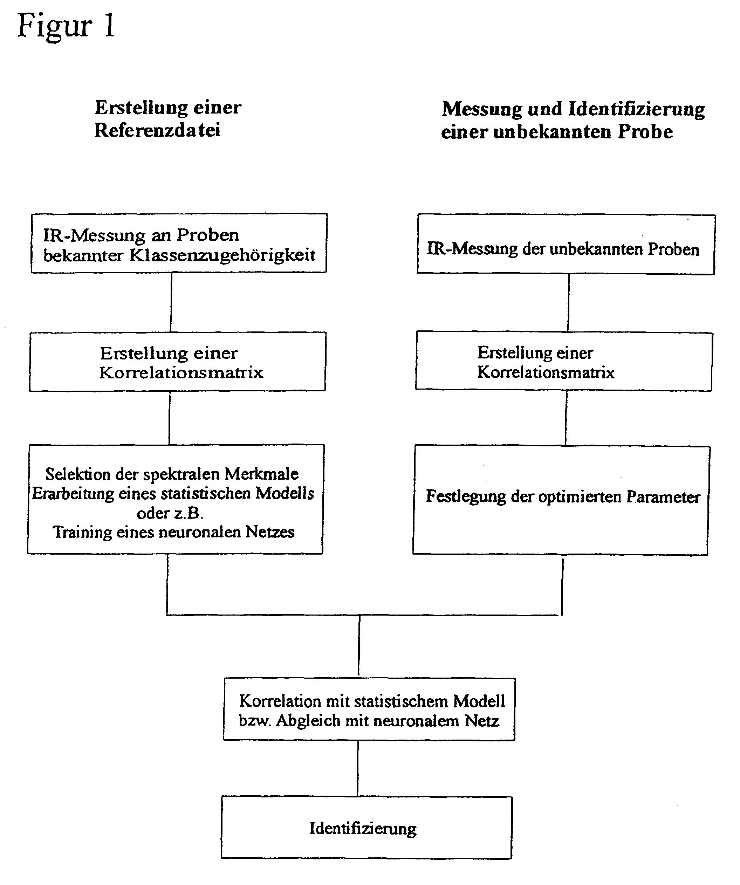

Zum besseren Verständnis ist der typische Ablauf des Verfahrens in Abb. 1 schematisch dargestellt.

Insgesamt erlaubt das neue Verfahren zur Diagnose TSE-induzierter Veränderungen in Gewebe Aussagen innerhalb weniger als einer Minute nach Erhalt der Probe. Damit ist es sowohl dem immunologischen Nachweis des Prionproteins und auch der immun-histologischen Diagnose überlegen, die erst nach bis zu 12 Stunden ein Ergebnis liefern. Eine routinemäßige Anwendung des erfindungsgemäßen Verfahrens, etwa zur Fleischkontrolle in Schlachthöfen, erfordert daher praktisch keinerlei Zwischenlagerung des Schlachtgutes bis zum Erhalt der Diagnose. Die Schnelligkeit der Diagnose stellt einen ökonomischen Vorteil gegenüber bekannten Verfahren dar, da Lagerungszeit des Schlachtgutes und damit Raum- und Energiekosten für die Kühlung minimiert werden. Zusätzlich wird eine größere Frische des Fleisches zum Zeitpunkt des Endverbrauchs erzielt.

Das Verfahren läßt sich sehr gut in einen Routineprozeß integrieren, da Spektrenaufnahme, Spektrenverarbeitung und die Klassifizierung vollständig computergesteuert erfolgen und sich sehr leicht automatisieren lassen. Ein geringer Personalbedarf besteht infolge dessen lediglich für die an sich einfache Probenvorbereitung, die im Gegensatz zu anderen Verfahren keine aufwendige Probenvorbehandlung (z.B. Anreicherung des Prionproteins mittels PK-Verdau), kein Nachweisagens (z.B. Immunolabel) und keine Anfärbung der Gewebedünnschnitte (z.B. mittels Immunohistochemie) erfordert.

Das erfindungsgemäße Verfahren kann ohne Einbeziehung hochspezialisierter Fachleute (etwa von Histologen) durchgeführt werden, da die Klassifizierung der IR-Spektren durch an sich bekannte, für die Zwecke der TSE-Diagnostik optimierte Verfahren der computergestützten Mustererkennung erfolgt. Die Bewertung der Spektren anhand streng mathematischer Kriterien führt gleichzeitig zu einer hohen Sicherheit der Diagnose, die ohne subjektives Erfahrungswissen auskommt und somit unvermeidbare, menschliche Fehleinschätzungen umgeht.

Aufgrund des geringen Personalbedarfs und praktisch keiner laufenden Materialkosten stellt das erfindungsgemäße Verfahren ein wirtschaftlich sinnvolles Konzept dar.

Der Vorzug des erfindungsgemäßen Verfahrens in seiner besonderen IR-mikroskopischen Ausführung zur ortsaufgelösten Analyse von Gewebedünnschnitten liegt in der Kombination spezifischer, spektral aufgelöster Strukturinformation und der hohen Ortsauflösung, die hieraus erzielt wird. So kann mittels der erreichbaren Ortsauflösung eines IR-Mikroskopes die Beteiligung einzelner Neuronen am Krankheitsverlauf erfaßt und untersucht werden. Die sehr hohe diagnostische Empfindlichkeit resultiert aus der Tatsache, daß praktisch keine Mittelung von Merkmalen kranker und gesunder Zellen erfolgt, wie es bei anderen, nicht-ortsaufgelösten Methoden zwangsläufig der Fall ist. Diese besondere Ausführungsform des Verfahrens erfordert derweil noch relativ viel Zeit für die Datenakquisition, welche in Abhängigkeit der Größe des untersuchten Gewebearials und der Ortsauflösung 1 bis 6 Stunden dauert, und eignet sich daher weniger für routinemäßige Kontrollen. Sie dürfte jedoch eine breite Anwendung in der wissenschaftlich klinischen Erforschung der bislang unverstandenen Pathogenesemechanismen von TSE finden. Perspektivisch wird die Kombination dieser Ausführungsform mit sogenannten Array-Infrarotdetektoren, die zur Zeit von verschiedenen Herstellern entwickelt werden und mit denen die ortsaufgelöste Messung von IR-Spektren kompletter Areale von Gewebedünnschnitten innerhalb sehr kurzer Zeit 4möglich ist, das Verfahren auch der schnellen Routinediagnostik zugänglich werden.

Zur Durchführung des erfindungsgemäßen Verfahrens werden Gewebeproben dem Organismus *post mortem* entnommen. Dabei kann es sich sowohl um tierische als auch menschliche Organismen handeln.

Das Verfahren ist prinzipiell für die Diagnose jeder der speziellen Krankheitsformen geeignet, die unter dem Begriff transmissible spongiforme Enzephalopathie (TSE) zusammengefaßt werden, wie z.B. BSE, Scrapie oder CJD.

Als Entnahmeort der Gewebeproben kommen alle Organe in Betracht, die durch eine TSE hervorgerufene pathologische Veränderungen aufweisen. Nach heutigem Wissensstand betroffene Organe sind das Zentrale Nervensystem, das periphere Nervensystem, Organe des lymphatischen Systems, des Verdauungssystems, des endokrinen Systems, des kardiovaskulären Systems und des respiratorischen Systems.

Bevorzugte Entnahmeorte sind das Zentrale Nervensystem und das periphere Nervensystem, wobei insbesondere Medulla oblongata sowie Pons des Hirns vorteilhaft sind.

Die Präparation der Gewebeprobe richtet sich nach der besonderen Ausführungsform des Verfahrens.

Für die Analyse voll hydratisierter Gewebeproben werden kleine Gewebestücke entnommen. Die nativen Proben werden z.B. in handelsüblichen IR-Küvetten plaziert.

Alternativ wird ein Homogenisat des Gewebematerials in H₂O hergestellt und Aliquote in IR-Küvetten gebracht. In Abwandlung werden Aliquote dieser Suspension als transparente Filme auf IR-durchlässigen Probenhaltern aufgetrokkent, wobei reduzierte Drücke sich als vorteilhaft im Sinne einer Beschleunigung des Antrocknungsvorganges erwiesen haben (Helm et al. (1991) J. Gen. Microbiol. 137:69-79.

Für die spezielle Durchführung des Verfahrens in einer infrarotmikroskopischen Meßanordnung zur Erfassung ortsspezifischer Informationen werden Krydünnschnitte, z.B. sagittale Schnitte präparierter Hirne angefertigt. Diese werden plan auf IR-transparente Objektträger aufgebracht. Das Verfahren erfordert keine weitere Fixierung des Dünnschnittes und die Proben werden bis zur Messung in trokkener Umgebung bei Raumtemperatur aufbewahrt.

In einer weiteren Ausführungsform der Erfindung, bei der Infrarotlichtleiter eingesetzt werden, läßt sich das Verfahren prinzipiell auch am lebenden Organismus anwenden, indem der Lichtleiter minimalinvasiv in das Gewebe eingeführt und dort das Infrarotspektrum direkt erfaßt wird. Die Realisierung dieser Ausführungsform ist zur Zeit noch an die Weiterentwicklung der Infrarotlichtleitertechnologie gebunden, da die derzeit verfügbaren Lichtleiter noch zu geringe spektrale Empfindlichkeiten aufweisen und zudem noch zu unflexibel und zu groß sind.

Als Material für Küvetten bzw. Probenträger der oben beschriebenen Präparationsvarianten können prinzipiell alle in der IR-Spektroskopie üblicherweise verwendeten wasserunlöslichen optischen Materialien eingesetzt werden, wobei sich CaF₂ und BaF₂ besonders bewährt haben.

Die für die Aufnahme der IR-Spektren benötigten Substanzmengen und ihre flächenmäßige Ausdehnung können sehr klein gehalten werden. Je nach vorgegebenen Bedingungen (z.B. Spektroskopieren mit oder ohne Strahlfokussierung bzw. Verwendung eines IR-Mikroskops) können Substanzmengen im Bereich von µg bis ng eingesetzt werden. Die Durchmesser der durchstrahlten Probenareale variieren dementsprechend zwischen 1-3 mm und 10-30 µm. Die Untergrenze entspricht etwa der Größe einer bzw. weniger Zellen (z.B. Neuronen).

Verfahrensgemäß werden Infrarotspektren der Gewebeproben gemessen, die in einer der beschriebenen Weise hergestellt wurden. Die Aufnahme der Spektren erfolgt hierbei vorzugsweise mit einem Fourier-Transform-Infrarotspektrometer, welches gegenüber konventionell arbeitenden, dispersen Geräten eine Reihe von bekannten Vorteilen aufweist, von denen hier nur die Schnelligkeit der Datenaufnahme und die höhere Empfindlichkeit genannt werden sollen. Die Verwendung eines konventionellen, dispersen IR-Spektrometers ist grundsätzlich auch möglich, führt jedoch zu einem Verlust an Schnelligkeit des Verfahrens. Prinzipiell kann für die Spektrenmessung jede der an sich bekannten IR-spektroskopischen Meßanordnungen eingesetzt werden (z.B. in Transmission/Absorption, abgeschwächter Totalreflexion, direkter oder diffuser Reflexion). Besonders bewährt hat sich die Transmissions/Absorptionsspektroskopie.

Die Aufnahme des Infrarotspektrums erfolgt typischerweise im Spektralbereich des sogenannten mittleren Infrarots zwischen 500 und 4000 cm⁻¹. Engere Spektralbereiche auch im nahen Infrarot zwischen 4000 und 10000 cm⁻¹ führen ebenfalls zu einer erfolgreichen Diagnose, wenn zuvor sichergestellt wurde, daß die Spektren der infizierten und der gesunden Gewebeproben charakteristische Varianzen im erfaßten Spektralbereich aufweisen. Es hat sich insbesondere erwiesen, daß besonders markante spektrale Unterschiede zwischen TSE-infizierten und nicht-infizierten Geweben zwischen 1000 und 1300 cm⁻¹ detektiert werden können und daß sich dieser Bereich daher bevorzugt für die Diagnose eignet.

Die Auswahl eines oder mehrerer geeigneter Spektralbereiche kann z.B. durch visuelle Inspektion der Spektren (Auswahl der Bereiche mit den stärksten und charakteristischsten Veränderungen im Vergleich zur Kontrollgruppe) oder durch ein an sich bekanntes multivariates Verfahren zur Selektion spektraler Merkmale erfolgen.

Die physikalischen Meßparameter, wie spektrale Auflösung oder Anzahl der gemittelten Spektren etc., können innerhalb der in der IR-Spektroskopie üblichen Bereiche variiert werden, ohne sich in der Praxis als kritisch für den Erfolg der Klassifizierung bzw. der Diagnose zu erweisen. Wichtig bei der Festlegung der Parameter der Spektrengewinnung sowie der Probenpräparation ist lediglich, daß für alle Messungen, insbesondere auch für die Kontrollmessungen an Gewebeproben nicht infizierter Tiere, identische Parameter gewählt werden.

Unabhängig von der Wahl des mathematisch-statistischen Verfahrens, das für die Klassifizierung der Spektren herangezogen wird, hat sich die Unterziehung der Spektren einer vorherigen Aufbereitung als vorteilhaft erwiesen. In Frage kommende, an sich bekannte Methoden sind etwa Berechnung der ersten oder zweiten Ableitung, Spektren-Dekonvolution oder anderen Verfahren zur Erhöhung des spektralen Kontrastes, die eine Bandenerkennung erleichtern und eine Minimierung etwaig vorliegender Basislinienprobleme gestatten. Bei Vorliegen großer Probenzahlen hat sich überdies eine vorhergehende Datenreduktion durch Methoden der multivariaten Statistik wie z.B. der Faktoranalyse als hilfreich erwiesen.

Die Durchführung des Verfahrens erfordert eine einmalige Erstellung einer Referenzspektrendatenbank. Hierfür werden Spektren von Proben aus TSE-infizierten Organismen und solche von Proben aus TSE-freien Individuen gemessen.

Probenpräparation und Spektrenaufnahme werden hierfür in analoger Weise wie bei den unbekannten Proben durchgeführt. Entscheidend ist, daß alle Parameter für die Referenz- und Probenmessungen identisch gewählt werden.

Das Spektrum der zu untersuchenden Probe wird mit den Spektren der Referenzdatenbank verglichen. Dabei erfolgt die Klassifizierung des Spektrums vorzugsweise mithilfe eines der an sich bekannten Verfahren zur Mustererkennung, beispielsweise mit Algorithmen der multivariaten Statistik, künstlichen neuronalen Netzen oder genetischen Algorithmen. In diesem Schritt wird das Spektrum im Sinne eines Zwei-Klassen-Problems als gesund oder TSE-infiziert klassifiziert.

Für die ortsaufgelöste Durchführungsform des Verfahrens wird die Probe, die in diesem Fall ein auf einen Objektträger aufgebrachter Gewebedünnschnitt ist, in den Strahlengang eines Infrarotmikroskops gebracht. Die Spektrenaufnahme in der infrarotmikroskopischen Meßanornung kann wahlweise in Transmission oder in direkter Reflexion erfolgen. Es werden Infrarotspektren an verschiedenen Gewebestellen aufgenommen. Die hierbei erreichte Ortsauflösung kann durch den Schrittabstand der einzelnen Meßpunkte bestimmt werden. Äußerst vorteilhaft ist der Einsatz eines Computer-gesteuerten x/y-Tisches, der automatisierte Spektrenmessungen gemäß eines beliebig bestimmbaren Rasters mit definierten Schrittabständen ermöglicht. Derartige x/y-Tische gehören heute zur Standardausstattung moderner IR-Mikroskope.

Ergebnis einer ortsaufgelösten Messung (Mapping) ist eine Infrarotspektrenserie, wobei jedes Spektrum einen Pixel auf dem fiktiven Raster des Gewebedünnschnitts repräsentiert. Auf diese Weise werden IR-Daten erhalten, die den gewählten Ausschnitt des Dünnschnittes vollständig abdekken. Die ortsspezifische Information über die räumliche Ausbreitung der TSE im Gewebe wird erhalten, indem jedes der Spektren eines Mapping-Datensatzes mit der Referenzdatenbank abgeglichen wird und so entweder als gesund oder infiziert klassifiziert wird.

Das folgenden Beispiele sollen verdeutlichen, wie ZNS-Proben Scrapie-infizierter Hamster von denen gesunder Kontrolltiere gemäß des erfindungsgemäßen Verfahrens anhand der krankheitsspezifischen spektralen Änderungen ihrer Infrarotspektren differenziert werden können.

### Beispiel 1

Erwachsene weibliche Syrische Hamster (*Mesocricetus auratus*) wurden mit dem Scrapie Stamm 263K (zur Verfügung gestellt von Dr. Richard Kimberlin) intracerebral und intraperitoneal infiziert. Im terminalen Stadium der Krankheit (70-120 Tage nach Infektion) wurden die Gehirne dieser Tiere (S) und von entsprechenden, nicht-infizierten Kontrolltieren (N) *post mortem* entnommen, wobei korrespondierende Vergleichspaare von gleichem Alter waren.

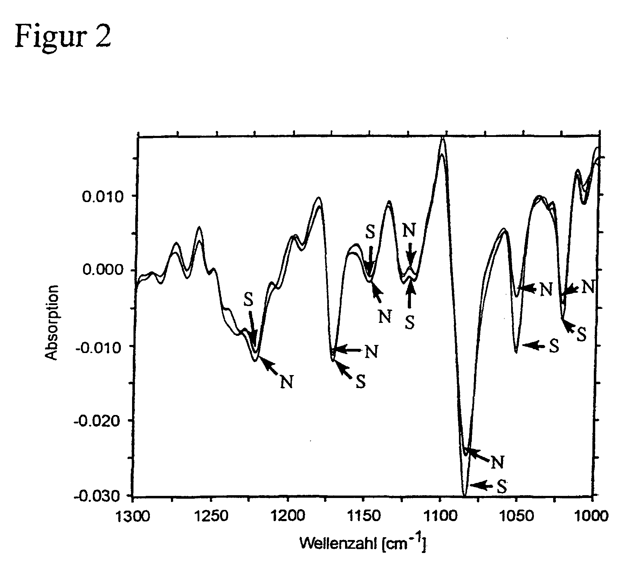

Für die Analyse der vollhydratisierten Gewebeproben wurden kleine Stücke (µg-Mengen) der nativ herauspräparierten *Medulla oblongata* und *Pons* in eine FT-IR Küvette gegeben, die mit CaF₂-Fenstern und einer optischen Weglänge von 8 µm Schichtdicke ausgerüstet war. Die Infrarotspektren dieser Proben wurden in einem FT-IR Spektrometer in Transmission/Absorption gemessen (spektrale Auflösung: 4 cm⁻¹, Apodisation: Happ-Genzel, Zahl der Scans: 128, Zerofilling: 4). Zwei typische Spektren von S- und N-Gewebeproben sind in der Figur 2 im Spektralbereich zwischen 1300 und 1000 cm⁻¹ dargestellt, in dem besonders prominente Unterschiede beobachtet werden können. Zur besseren Visualisierung der Banden sind die zweiten Ableitungen dargestellt, so daß Bandenmaxima als Minima erscheinen.

### Beispiel 2

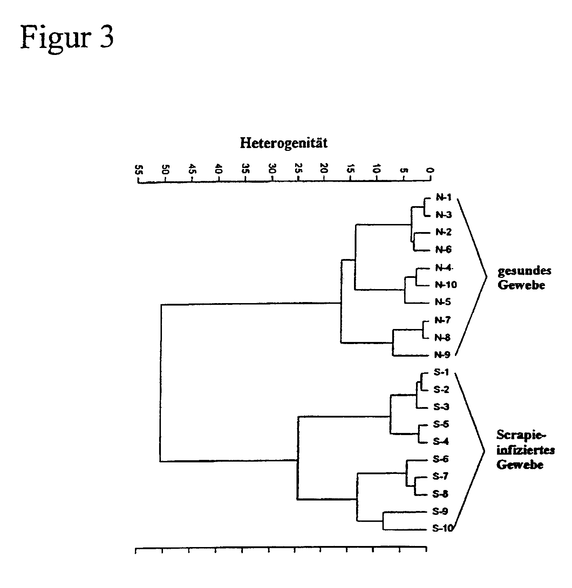

In Abwandlung der in Beispiel 1 dargelegten Ausführungsform wurden jeweils 10 S- und N-Proben, die auf gleiche Weise wie in Beispiel 1 erhalten wurden, in H₂O homogenisiert (10 µl H₂O pro mg Gewebematerial). Aliquote von 35 µl der Suspensionen wurden auf einen PC-gesteuerten Multiprobenträger, der auch zum Messen von mikrobiellen Proben geeignet ist (Helm et al. (1991) *J. Gen. Microbiol.* 137: 69-79; Helm et al. (1991) *J. Microbiol. Meth.* 14:127-142; Naumann (1998) *Proc. SPIE* 3257: 245-257), aus ZnSe aufgebracht und nach den in der Literatur beschriebenen Angaben angetrocknet. Infrarotspektren der so erhaltenen Filme wurden in Transmission aufgenommen und einer hierarchischen Klassifizierung unterzogen, wobei zweite Ableitungen der Spektren im Spektralbereich zwischen 1100 und 1000 cm⁻¹ zugrunde gelegt wurden. Das nach dem sogenannten Ward's Algorithmus berechnete Dendrogramm der Klassifizierung dieser Spektren zeigt die Figur 3. Die Spektren der infizierten Tiere (S-1 bis S-10) konnten perfekt von denen der gesunden Tiere (N-1 bis N-10) separiert werden.

### Beispiel 3

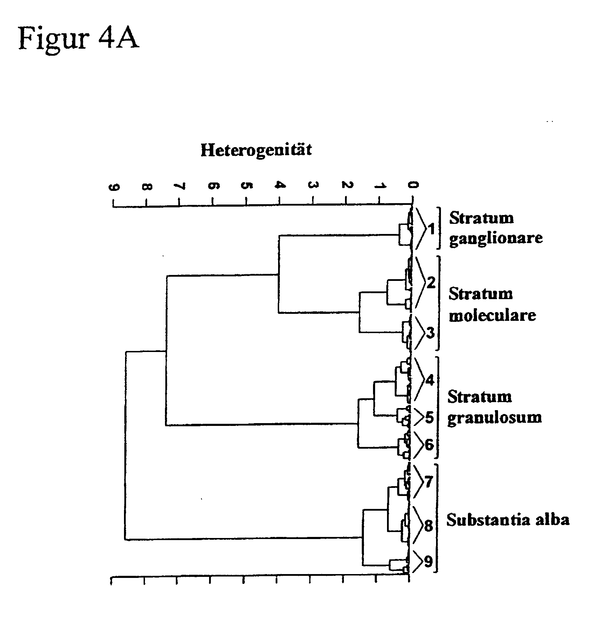

In Abwandlung der in den Beipielen 1 und 2 dargestellten Ausführungsformen wurden von ZNS-Proben von N- und S-Tieren, die wie oben erläutert erhalten wurden, 8 µm dikke Kryodünnschnitte angefertigt und mit den an sich bekannten Verfahren des FT-IR Mappings (Diem et al. (1999) Appl. Spectroscopy 53: 148A-160A; Lasch & Naumann (1998) *Cell. Mol. Biol.* 44: 189-202; Choo et al. (1996) *Biophys.* J. 71: 1672-1679) und der Infrarotbildgebung (Lasch & Naumann (1998) *Cell. Mol. Biol.* 44:189-202; Lasch et al. (1998) *Proc. SPIE* 3257: 187-198) gemessen und charakterisiert. Es wurden Spektren von 1,5 mm X 1,5 mm großen Arealen in Schritten von 50 µm durch eine 60 µm Apertur aufgenommen. Die von S- und N-Proben erhaltenen Spektren wurden dann jeweils zunächst getrennt einer hierarchischen Klassifizierung unterzogen, um eine Differenzierung der für verschiedene Hirnstrukturen typischen Spektren zu erzielen. Figur 4A zeigt ein Dendrogramm, für dessen Berechnung nach Datenkompression mittels Hauptkomponentenanalyse die ersten drei Hauptkomponenten zwischen 1450 und 950 cm⁻¹ (ca. 500 Datenpunkte) benutzt wurden. Die vier Hauptklassen können den vier histologisch definierten cerebellaren Strukturen *Stratum moleculare, Stratum ganglionare, Stratum granulosum* und *Substantia alba* zugeordnet werden. Darüber hinaus konnten insgesamt neun spektrale Klassen separiert werden (numeriert: 1-9), die bestimmten Substrukturen innerhalb des Cerebellums entsprechen. Aus Gründen der Übersichtlichkeit ist in Figur 4A nur jedes dritte Spektrum des insgesamt 930 Spektren enthaltenen Mapping-Datensatzes dargestellt.

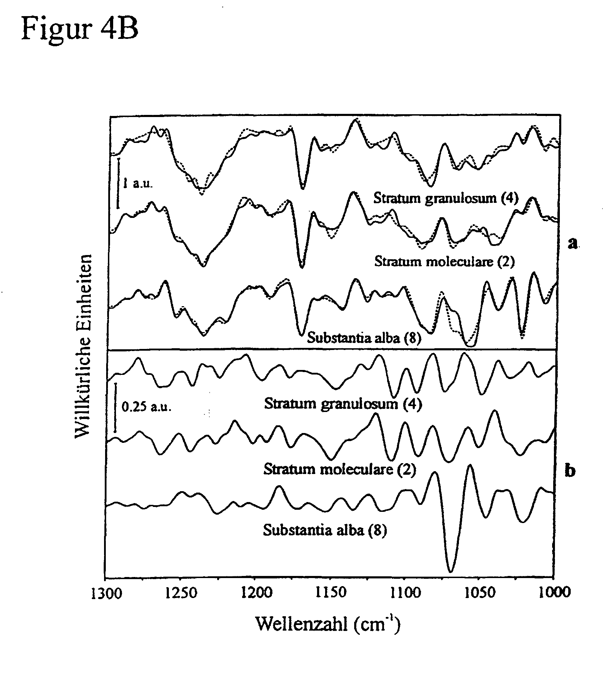

Anschließend wurden Spektren einander entsprechender spektraler Klassen (z.B. Klasse 2 der Spektren von *Stratum moleculare =* graue Substanz des Kleinhirns) der N-und der S-Proben miteinander verglichen. Im oberen Teil von Figur 4B (a) sind vektornormierte zweite Ableitungen von Spektren von Proben Scrapie-infizierter Tiere (gestrichelte Linien) solchen von gesunden Tieren (durchgezogene Linien) gegenübergestellt. Im unteren Teil (b) sind die Differenzspektren zwischen vektornormierten S- und N-Spektren aus a) für die jeweiligen Gewebestrukturen dargestellt. Alle für diesen Vergleich verwendeten Spektren sind Mittelwerte von Spektren einer Spektrenklasse (s. Figur 4A). Sie sind mit dem Namen ihrer cerebellaren Schicht und der Nummer ihrer spektralen Klasse gekennzeichnet. Die für die einzelnen Gewebeklassen beobachteten charakteristischen spektralen Unterschiede eignen sich für eine sichere Diagnose des krankheitsassoziierten Pathogeneseprozesses.

## Patentansprüche

1. Verfahren zur Diagnose von TSE-induzierten pathologischen Veränderungen in Geweben, wobei die Veränderungen durch Scrapie, BSE oder durch eine andere dem TSE-Formenkreis zugehörige Krankheitsform hervorgerufen werden, **dadurch gekennzeichnet, daß**
(a) Infrarotstrahlung auf eine durch TSE pathologisch veränderte Gewebeprobe gelenkt wird und die spektralen Charakteristika der Infrarotstrahlung nach Wechselwirkung mit der Probe registriert werden und
(b) die so erhaltenen Infrarotspektren mit einer Referenzdatenbank, welche Infrarotspektren von TSE-infizierten Geweben und von nicht-infizierten Geweben enthält, verglichen und klassifiziert werden.

2. Verfahren nach Anspruche 1, **dadurch gekennzeichnet, daß** die Gewebeprobe dem zentralen Nervensystem, dem peripheren Nervensystem oder Organen des lymphatischen Systems, des Verdauungssystems, des endokrinen Systems, des kardiovaskulären Systes oder des respiratorischem Systems entstammt.

3. Verfahren nach mindestens einem der Ansprüche 1 und 2, **dadurch gekennzeichnet, daß** das Infrarotspektrum des Gewebes entweder in einer oder mehreren Regionen des mittleren Infrarotbereichs von 500 bis 4000 cm⁻¹ oder des nahen Infrarotbereichs von 4000 bis 10000 cm⁻¹ oder in beiden Regionen gemessen wird.

4. Verfahren nach mindestens einem der Ansprüche 1 bis 3, **dadurch gekennzeichnet, daß** das Infrarotspektrum des Gewebes im spektralen Bereich von 1000 bis 1300 cm ⁻¹ des mittleren Infrarots erfaßt wird.

5. Verfahren nach mindestens einem der Ansprüche 1 bis 4, **dadurch gekennzeichnet, daß** die Wechselwirkung der Infrarotstrahlung mit der Probe und die Detektion der charakteristisch veränderten Strahlung in einer Transmissions/Absorptionsanordnung, einer Anordnung zur Messung der abgeschwächten Totalreflexion, einer Anordnung zur Messung der direkten oder diffusen Reflexion oder mittels IR-Lichtleitertechnik erfolgt.

6. Verfahren nach mindestens einem der Ansprüche 1 bis 5, **dadurch gekennzeichnet, daß** der Vergleich des Infrarotspektrums der zu untersuchenden Probe mit den Infrarotspektren der Referenzdatenbank mittels einer oder mehrerer Methoden der Mustererkennung, vorzugsweise mittels Algorithmen der multivariaten Statistik oder künstlicher neuronaler Netze, erfolgt, wobei die dem Vergleich zugrundeliegenden spektralen Bereiche mit Verfahren zur Extraktion optimaler spektraler Merkmale, etwa mit genetischen Algorithmen, ermittelt werden.

7. Verfahren nach mindestens einem der Ansprüche 1 bis 6, **dadurch gekennzeichnet, daß** die Messung des Infrarotspektrums mit einer infrarotmikroskopischen Meßanordnung an einem Gewebedünnschnitt in Transmission oder in direkter Reflexion durchgeführt wird.

8. Verfahren nach Anspruch 7, **dadurch gekennzeichnet, daß** ortsaufgelöst, d.h. in Abhängigkeit von der Gewebestelle, an welcher der Infrarotstrahl durch die Probe geleitet wird, Infrarotspektren gemessen werden.

9. Verfahren nach mindestens einem der Ansprüche 7 und 8, **dadurch gekennzeichnet, daß** jedes der ortsabhängig registrierten Infrarotspektren mit der Referenzdatenbank verglichen wird und somit ortsspezifische Informationen über die Krankheitsausbreitung im Gewebe erhalten werden.

10. Verfahren nach mindestens einem der Ansprüche 7 bis 9, **dadurch gekennzeichnet, daß** die Referenzdatenbank Referenzspektren von TSE-infizierten Geweben und von nicht-infizierten Geweben jeweils aller im Gewebeschnitt mittels Infrarotspektroskopie unterscheidbarer Strukturen enthält.

## Claims

1. A method of diagnosing TSE-induced pathologic changes in tissues, said changes being caused by scrapie, BSE or another type of disease that belongs to the group of TSE diseases, **characterized in that**
(a) infrared radiation is directed onto a tissue sample that has been pathologically changed and the spectral characteristics of the infrared radiation are determined after it has interacted with the sample, and
(b) the infrared spectra thus obtained are compared with a reference database containing TSE-infected and non-infected tissues and classified on that basis.

2. The method according to claim 1, **characterized in that** said tissue sample was taken from the central nervous system, the peripheral nervous system or from organs of the lymphatic system, the digestive system, the endocrine system, the cardiovascular system, or the respiratory system.

3. The method according to at least one of claims 1 and 2, **characterized in that** the infrared spectrum of the tissue is measured either in one or several regions of the medium infrared range from 500 to 4000 cm⁻¹ or the near infrared range from 4000 to 10000 cm⁻¹, or in both regions.

4. The method according to at least one of claims 1 through 3, **characterized in that** the infrared spectrum of the tissue is detected in the spectral range from 1000 to 1300 cm⁻¹ of the medium infrared range.

5. The method according to at least one of claims 1 through 4, **characterized in that** the the infrared radiation interacts with the sample, and the characteristically changed radiation is detected in a transmission/absorption arrangement, an arrangement for measuring attenuated total reflection, an arrangement for measuring direct or diffuse reflection, or using IR fiber-optic waveguide equipment.

6. The method according to at least one of claims 1 through 5, **characterized in that** the infrared spectrum of the sample to be examined is compared with the infrared spectra of the reference database using one or several methods of pattern recognition, preferably algorithms of multivariate statistics or artificial neuronal networks, while the spectral ranges the comparison is based on are determined using methods for extracting optimum spectral characteristics such as genetic algorithms.

7. The method according to at least one of claims 1 through 6, **characterized in that** the infrared spectrum is measured using an infrared microscopic measuring setup on a microsection of tissue in a transmission or direct reflection arrangement.

8. The method according to claim 7, **characterized in that** infrared spectra are measured in local separation, i.e. depending on the site where the infrared beam is guided through the sample.

9. The method according to at least one of claims 7 and 8, **characterized in that** each of the infrared spectra recorded separately depending on irradiation site is compared with the reference database so that site-specific information about the spread of the disease within the tissue is retained.

10. The method according to at least on of claims 7 through 9, **characterized in that** the reference database contains reference spectra of TSE-infected tissues and non-infected tissues of all structures that are distinguishable in a tissue section using infrared spectroscopy.

## Revendications

1. Procédé de diagnostic des modifications pathologiques de tissus induites par EST, dans lequel ces modifications sont suscitées par la tremblante, l'ESB ou par une autre forme de maladie appartenant à l'ensemble des EST, **caractérisé en ce que**
(a) on dirige un rayonnement infrarouge à travers un échantillon de tissu pathologiquement modifié par l'EST et les caractéristiques spectrales du rayonnement infrarouge sont enregistrées après interaction avec l'échantillon et
(b) on compare et classifie les spectres infrarouges obtenus de cette façon à l'aide d'une banque de données de référence qui contient les spectres infrarouges de tissus infectés et non infectés par l'EST.

2. Procédé selon la revendication 1, **caractérisé en ce que** l'échantillon de tissu provient du système nerveux central, du système nerveux périphérique ou d'organes du système lymphatique, du système digestif, du système endocrinien, du système cardiovasculaire ou du système respiratoire.

3. Procédé selon au moins l'une des revendications 1 et 2, **caractérisé en ce que** le spectre infrarouge du tissu est mesuré soit dans une, soit dans plusieurs régions du domaine infrarouge médian de 500 à 4 000 cm⁻¹ ou du domaine infrarouge proche de 4 000 à 10 000 cm⁻¹ ou dans les deux régions.

4. Procédé selon au moins l'une des revendications 1 à 3, **caractérisé en ce que** le spectre infrarouge du tissu est enregistré dans le domaine spectral de 1 000 à 1 300 cm⁻¹ de l'infrarouge médian.

5. Procédé selon au moins l'une des revendications 1 à 4, **caractérisé en ce que** l'interaction du rayonnement infrarouge avec l'échantillon et la détection du rayonnement transformé de manière caractéristique a lieu dans un dispositif de transmission/absorption, dans un dispositif de mesure de la réflexion totale affaiblie, dans un dispositif de mesure de la réflexion directe ou diffuse ou au moyen de la technique de guide de lumière IR.

6. Procédé selon au moins l'une des revendications 1 à 5, **caractérisé en ce que** la comparaison du spectre infrarouge de l'échantillon à examiner avec les spectres infrarouges de la banque de données de référence s'effectue au moyen d'une ou de plusieurs méthodes de reconnaissance de modèles, de préférence au moyen d'algorithmes de statistique multivariable ou de réseaux neuronaux artificiels, dans lequel les domaines spectraux qui sont pris pour base de la comparaison sont déterminés au moyen de procédés d'extraction de caractéristiques spectrales optimales, par exemple avec des algorithmes génétiques.

7. Procédé selon au moins l'une des revendications 1 à 6, **caractérisé en ce que** la mesure du spectre infrarouge est effectuée à l'aide d'un dispositif de mesure par microscope à infrarouge, sur une couche mince de tissu, en transmission ou en réflexion directe.

8. Procédé selon la revendication 7, **caractérisé en ce que** l'on mesure les spectres infrarouges par résolution locale, c'est-à-dire en fonction de l'endroit du tissu au niveau duquel le rayonnement infrarouge est dirigé à travers l'échantillon.

9. Procédé selon au moins l'une des revendications 7 et 8, **caractérisé en ce que** chacun des spectres infrarouges enregistrés en fonction de l'endroit de sa localisation est comparé avec la banque de données de référence ce qui permet de recueillir des informations concernant l'étendue de la maladie au niveau du tissu, spécifiquement liées à la localisation.

10. Procédé selon au moins l'une des revendications 7 à 9, **caractérisé en ce que** la banque de données de référence contient des spectres de référence de tissus infectés par l'EST et de tissus non infectés de toutes les structures différenciables par spectroscopie à infrarouge dans les coupes de tissus.
